# EUROPEAN PATENT SPECIFICATION

(11) **EP 0 844 010 B1**
(45) Date of publication and mention of the grant of the patent: **14.05.2003**
(21) Application number: 96118925.5
(22) Date of filing: 26.11.1996
(51) Int. Cl.: A63F 13/00

(54) **Apparatus for and method of controlling the abilities of play character in video game and video game storage medium**
Vorrichtung und Methode zur Kontrolle der Fähigkeiten einer Spielfigur in einem Videospiel und Videospielspeichermedium
Appareil et méthode pour le contrôle d'aptitudes d'un caractère de jeu dans un jeu vidéo et support d'enregistrement de jeu vidéo

(43) Date of publication of application: 27.05.1998
(73) Proprietor: Kabushiki Kaisha Konami Computer Entertainment Osaka, Osaka-fu (JP)
(72) Inventor: Toyohara, Koji, Kobe-shi, Hyogo-ken (JP); Nishikawa, Naoki, Kobe-shi, Hyogo-ken (JP); Yamada, Makiko, Otsu-shi, Shiga-ken (JP)
(74) Representative: Müller-Boré & Partner Patentanwälte

(56) References cited:
- EP-A- 0 634 727
- US-A- 4 491 324
- US-A- 5 390 937
- PATENT ABSTRACTS OF JAPAN vol. 095, no. 009, 31 October 1995 & JP 07 155463 A (HUDSON SOFT CO LTD), 20 June 1995,
- PATENT ABSTRACTS OF JAPAN vol. 096, no. 005, 31 May 1996 & JP 08 000830 A (SEGA ENTERP LTD), 9 January 1996,

## Description

### BACKGROUND OF THE INVENTION

### Field of the Invention:

The present invention relates to a video game apparatus which can be played by a video game player for controlling a play character displayed on a video screen to perform role playing for the video game player to develop a certain ability, which may be a personality, a method of controlling the growth of such a play character, and a medium which stores a game program of such a role playing game.

### Description of the Prior Art:

US-A-5,390,937 relates to a video game apparatus for realizing a role-playing game (RPG) of the type in which a player character, rather than the player, repeatedly battles with an enemy character on a video screen. Additionally, US-A-5,390,937 relates to a method and device for controlling the apparatus, and to a memory cartridge for the video game.

Furthermore, there are known various role playing games which can be played by a video game player to control a play character displayed on a video screen to perform role playing for the video game player. One of the known role playing games is a battle game in which a displayed play character grows while repeating battles against an opponent character in various scenes. According to another role playing game, a plurality of abilities available from a list of ability settings are selectively assigned to a play character to give the play character a certain personality.

In the above battle game, as the play character experiences more and more fights against the opponent character, the play character develops an increased combat ability. However, the combat ability of the play character increases or decreases with the game playing ability of the video game player, and the factor which governs the growth of the combat ability depends solely on how the play character fights with the opponent character. Consequently, the game ends up with similar results at all times, and fails to interest the game player sufficiently. In the other role playing game, the personality of the play character is established just as instructed by the game player. Therefore, the game player may soon lose interest in this role playing game for lack of variations in selecting play character personalities.

### SUMMARY OF THE INVENTION

It is therefore an object of the present invention to provide a video game apparatus which can be played by a video game player to repeatedly select various patterns of speech and action of a play character to increase or reduce, with probability, the number of credits given to the play character, and to assign some of the earned credits to various abilities to enable the play character to exhibit a unique personality.

Another object of the present invention is to provide a method of controlling the growth of a play character in a video game that can be played on such a video game apparatus.

Still another object of the present invention is to provide a video game medium which stores a game program of such a video game.

This object is solved by a video game apparatus according to claim 1, a method of controlling the growth of a play character according to claim 7 and a video game medium according to claim 8.

Preferred embodiments are defined in the dependent subclaims.

According to an aspect of the present invention, there is provided a video game apparatus comprising a display unit for displaying a play character and patterns of speech/action made by the play character, and menus corresponding to the patterns of speech and action, a control unit for selectively indicating the menus, speech/action memory means for storing a pattern of speech/action indicated by the control unit, speech/action control means for reading the pattern of speech/action indicated by the control unit from the speech/action memory means and controlling the play character to perform the pattern of speech/action, credit memory means for storing at least one type of credits given to the play character, credit varying means for increasing or reducing the number of credits of the at least one type depending on the pattern of speech/action indicated by the control unit, probability control means for increasing or reducing the number of credits with a probability depending on the pattern of speech/action indicated by the control unit, ability value memory means for storing a plurality of ability values representing a plurality of abilities of the play character, and ability value distributing means for distributing the credits stored in the credit memory means to the plurality of ability values with the control unit, and updating the ability values stored in the ability value memory means according to the distributed credits.

With the above arrangement, a plurality of menus are displayed on a display screen, and the control unit is operated to select one of the menus. A pattern of speech/action corresponding to the selected menu is performed, and the number of credits is increased or reduced with a given probability based on the performance of the pattern of speech/action. Specifically, if the selected pattern of speech/action is preferable, then the number of credits is increased, and if the selected pattern of speech/action is not preferable, then the number of credits is reduced. The video game player makes attempts to obtain as many credits as possible and assign the credits to abilities of the play character for thereby increasing ability values for abilities desired by the video game player. The video game player thus finds the video game interesting and can play the video game with a lot of fun.

The control unit may have at least one type of speech/action governed by an ability of a video game player, and the probability control means may comprise means for varying the probability based on the type of speech/action. Therefore, the video game player may be directly involved in the growth of the play character depending on certain types of speech/action.

The probability control means may comprise means for varying the probability depending on a plurality of patterns of speech/action indicated by the control unit. Therefore, a history of selected patterns of speech/action may greatly affect the acquisition of credits, causing the video game to develop with much interest and fun.

The video game apparatus may further comprise timer means for allowing a predetermined period of time to elapse each time the control unit selects one of the menus, the speech/action control means comprising means for randomly varying the pattern of speech/action depending on the passage of the predetermined period of time when the control unit selects one of the menus, the probability control means comprising means for varying the probability depending on the pattern of speech/action randomly varied by the speech/action control means. Since time is reflected as a new element in the development of the video game, the process of growth of the play character simulates an actual growing process more accurately, and the level of difficulty of the video game is made higher, for thereby making the video game more interesting to the video game player.

The video game apparatus may further comprise physical/mental condition memory means for storing a physical/mental condition of the play character, and physical/mental condition changing means for changing the physical/mental condition of the play character depending on the pattern of speech/action indicated by the control unit, the probability control means comprising means for varying the probability depending on the physical/mental condition of the play character. Inasmuch as a physical/mental condition such as a physical shape or guts is reflected as a new element in the development of the video game, the process of growth of the play character simulates an actual growing process more accurately, and the level of difficulty of the video game is made higher, for thereby making the video game more interesting to the video game player.

The video game apparatus may further comprise competing game control means for carrying out a competing game with the display unit, the control unit having means for selecting either one of a mode for growing the play character and a mode for performing the competing game, the competing game control means comprising means responsive to a selection by the control unit of the mode for performing the competing game, for introducing the play character having the ability values into the competing game and controlling the play character to act according to the ability values in the competing game. The play character which simulates the video game player is grown to achieve abilities close to those of the video game player, and thereafter participates in a competing game. In the competing game, the play character acts according to the ability values given thereto.

According to another aspect of the present invention, there is also provided a method of controlling the growth of a play character in a video game performed by a video game apparatus having a display unit for displaying a play character and patterns of speech/action made by the play character, and menus corresponding to the patterns of speech and action, a control unit for selectively indicating the menus, speech/action memory means for storing a pattern of speech/action indicated by the control unit, and speech/action control means for reading the pattern of speech/action indicated by the control unit from the speech/action memory means and controlling the play character to perform the pattern of speech/action, the method comprising the steps of imparting at least one type of credits to the play character, increasing or reducing the number of credits of the at least one type with a probability depending on the pattern of speech/action indicated by the control unit, storing the increased or reduced number of credits of the at least one type, operating the control unit to distribute the stored number of credits of the at least one type to a plurality of ability values representing a plurality of abilities of the play character, and storing the ability values with the distributed number of credits of the at least one type. In the above method, a plurality of menus are displayed on a display screen, and the control unit is operated to select one of the menus. A pattern of speech/action corresponding to the selected menu is performed, and the number of credits is increased or reduced with a given probability based on the performance of the pattern of speech/action. Specifically, if the selected pattern of speech/action is preferable, then the number of credits is increased, and if the selected pattern of speech/action is not preferable, then the number of credits is reduced. The video game player makes attempts to obtain as many credits as possible and assign the credits to abilities of the play character for thereby increasing ability values for abilities desired by the video game player. The video game player thus finds the video game interesting and can play the video game with a lot of fun.

According to still another aspect of the present invention, there is also provided a video game medium for use in a video game for displaying patterns of speech/action made by a play character, selectively indicating menus corresponding to the patterns of speech and action with a control unit, and controlling the play character to perform a pattern of speech/action indicated by the control unit, the video game medium comprising means for imparting at least one type of credits to the play character, means for increasing or reducing the number of credits of the at least one type with a probability depending on the pattern of speech/action indicated by the control unit, means for storing the increased or reduced number of credits of the at least one type, means for operating the control unit to distribute the stored number of credits of the at least one type to a plurality of ability values representing a plurality of abilities of the play character, and means for storing the ability values with the distributed number of credits of the at least one type.

The video game medium may comprise s cartridge having a recording medium in the form of a ROM or a RAM backed up by a cell, a CD-ROM in the form of a magnetooptical disk, a floppy disk, or the like. A game program is stored in the video game medium. When the game program is executed, a pattern of speech/action of the play character is performed, and credits given to the play character can simply be assigned to ability values of the play character by operating the control unit only. Though the video game has various aspects variable with a probability and has a high level of difficulty, it can be performed with ease and gives much interest and fun to the video game player.

The above and other objects, features, and advantages of the present invention will become apparent from the following description when taken in conjunction with the accompanying drawings which illustrate a preferred embodiment of the present invention by way of example.

### BRIEF DESCRIPTION OF THE DRAWINGS

FIG. 1 is a perspective view of a video game apparatus according to the present invention;
FIG. 2 is a block diagram of an electric system of the video game apparatus;
FIG. 3 is a view of an initial screen image displayed on a display screen of the video game apparatus;
FIG. 4 is a view of a screen image displayed on the display screen for registering a rookie baseball player;
FIG. 5 is a view of a screen image displayed on the display screen for entering personal data to identify a rookie baseball player;
FIG. 6 is a view of a screen image displayed on the display screen for indicating speech and action;
FIG. 7 is a view of a screen image displayed on the display screen when "camp" is selected;
FIG. 8 is a view of a screen image displayed on the display screen when "recovery" is selected;
FIG. 9 is a view similar to FIG. 6, showing a screen image in which "telephone" can be selected;
FIG. 10 is a view showing a screen image displayed on the display screen when "telephone" is selected;
FIG. 11 is a view of a screen image displayed on the display screen, showing a conversation in which the baseball player is ordered to play as a starting member of the farm team;
FIG. 12 is a view of a screen image displayed on the display screen, showing the baseball player playing as a batter in a baseball game of the farm team;
FIG. 13 is a view of a screen image displayed on the display screen, showing the results of the baseball player played as a starting member of the farm team;
FIG. 14 is a view of a screen image displayed on the display screen when the baseball player has suffered an injury as a negative event;
FIG. 15 is a view of a screen image displayed on the display screen when "ability increase" is selected;
FIG. 16 is a view of a scrolled screen image displayed on the display screen when "ability increase" is selected;
FIG. 17 is a view similar to FIG. 15, showing a screen image after abilities are increased;
FIG. 18 is a view of a screen image displayed on the display screen for registering a play character as a rookie baseball player;
FIG. 19 is a flowchart of a main routine of the procedure of a "success" game;
FIG. 20 is a flowchart of a process for indicating speech and action;
FIG. 21 is a flowchart of a process of "camp";
FIG. 22 is a flowchart of a process that is carried out when "batting" is indicated;
FIG. 23 is a flowchart of a process that is carried out when "recovery" is indicated;
FIG. 24 is a flowchart of a process that is carried out when "telephone" is indicated; and
FIG. 25 is a flowchart of a process for distributing "remaining experience credits".

### DETAILED DESCRIPTION OF THE PREFERRED EMBODIMENT

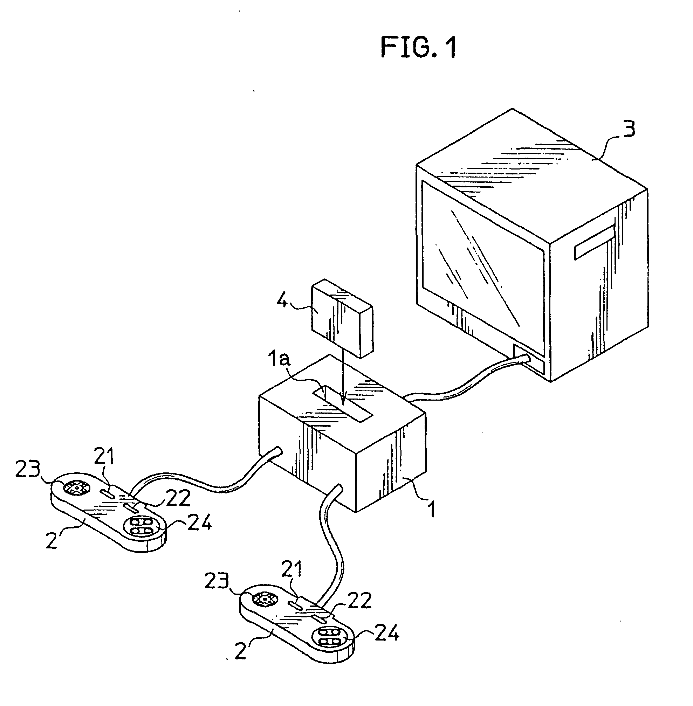

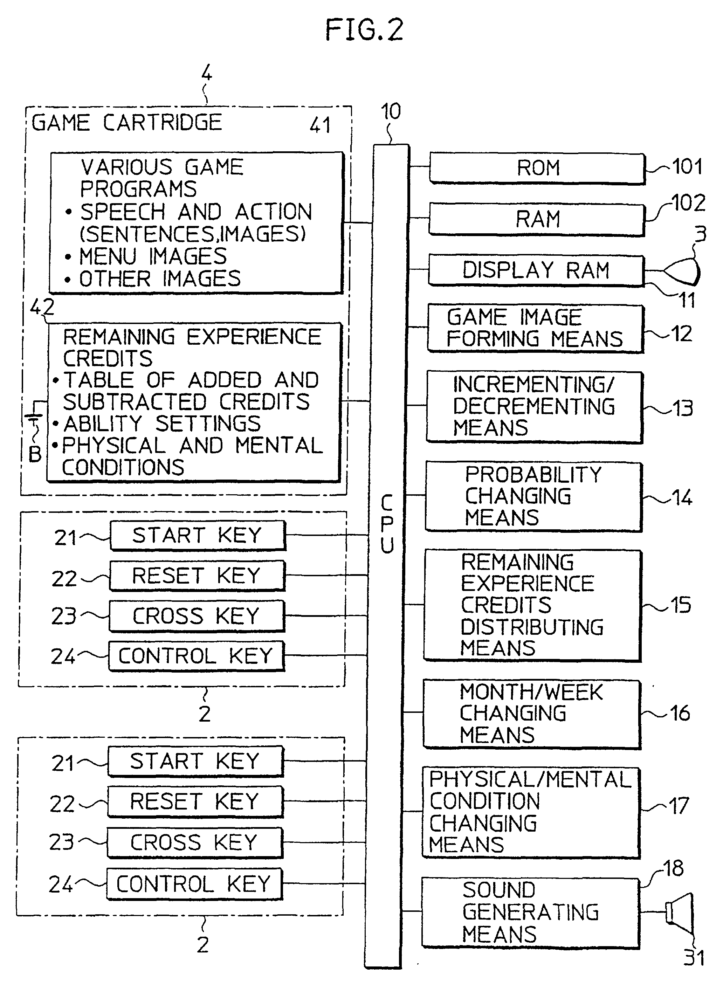

As shown in FIG. 1, a video game apparatus according to the present invention basically comprises a game device 1, a pair of controllers 2 connected to the game device 1 for sending commands to the game device 1, and a display monitor 3 such as a television receiver or the like connected to the game device 1 for displaying video game images. A game cartridge 4 having a read-only memory (ROM) 41 (see FIG. 2) which stores game programs can removably be inserted into a cartridge slot 1a in the game device 1. When the game cartridge 4 is inserted in the cartridge slot 1a, the ROM 41 and other circuits in the game cartridge 4 are electrically connected to an electric circuit (see FIG. 2) in the game device 1. The game cartridge 4 also has a random-access memory (RAM) 42 (see FIG. 2) for storing data and a backup cell B (see FIG. 2) for keeping desired data in the RAM 42.

Each of the controllers 2 has a start key 21, a reset key 22, a cross key 23 for indicating vertical and horizontal movements for a play character and other related characters displayed on the display monitor 3 and moving a cursor to various menus displayed on the display monitor 3, and a control key 24 for indicating actions for the play character and also indicating a selected menu. One or both of the controllers 2 can be connected to the game device 1 so that one or two players can play a video game whose game program is stored in the game cartridge 4.

The game device 1 houses therein a microcomputer, a ROM 101 and a RAM 102 (see FIG. 2) for processing the video game according to commands transmitted from the controllers 2 based on the game program stored in the ROM 41 and data stored in the RAM 42.

FIG. 2 shows in block form an electric system of the video game apparatus, including a central processing unit (CPU) 10 of the microcomputer of the game device 1. In the illustrated embodiment, the video game which is stored in the game cartridge 4 and processed by the CPU 10 is a "success" game, described later on, for growing a rookie baseball player (play character). If another video game, e.g., a baseball match game (fight game), stored in the game cartridge 4 is to be processed by the CPU 10, then the electric system of the video game apparatus needs various control means for performing various operations according to the baseball rules.

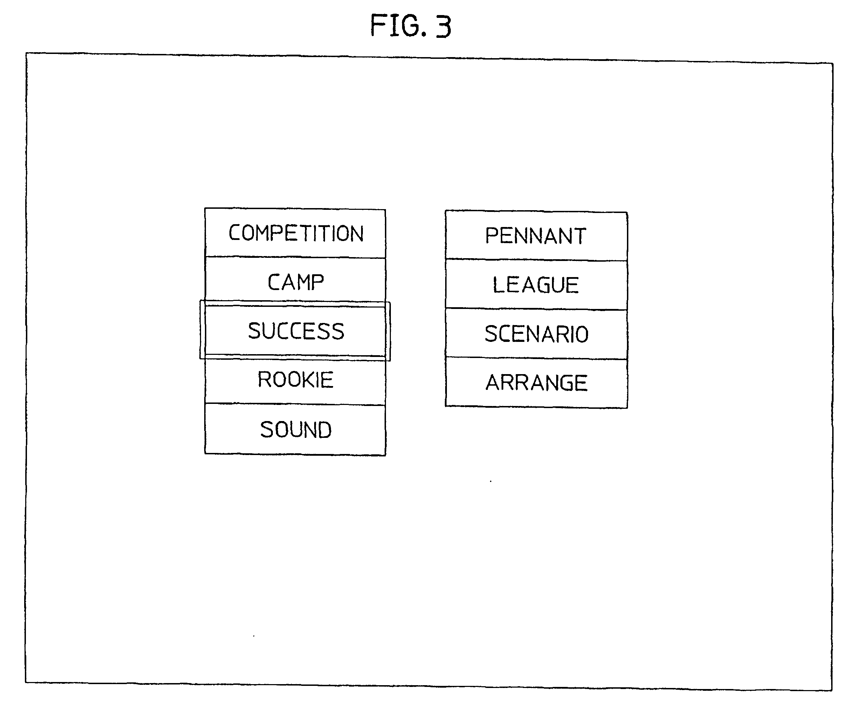

FIGS. 3 through 18 show various screen images displayed on the display screen of the display monitor 3, illustrative of how the "success" game proceeds.

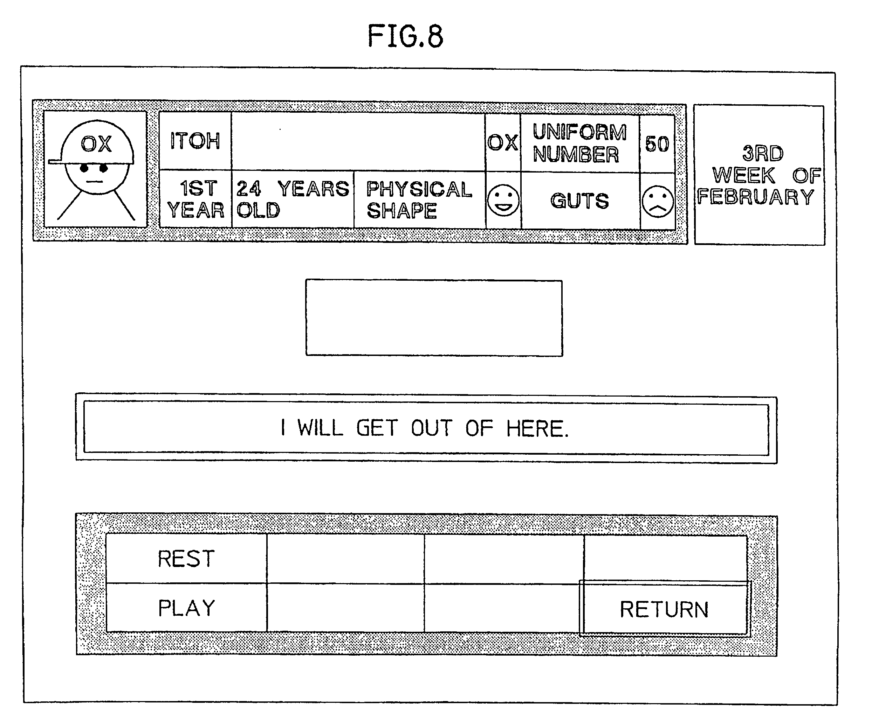

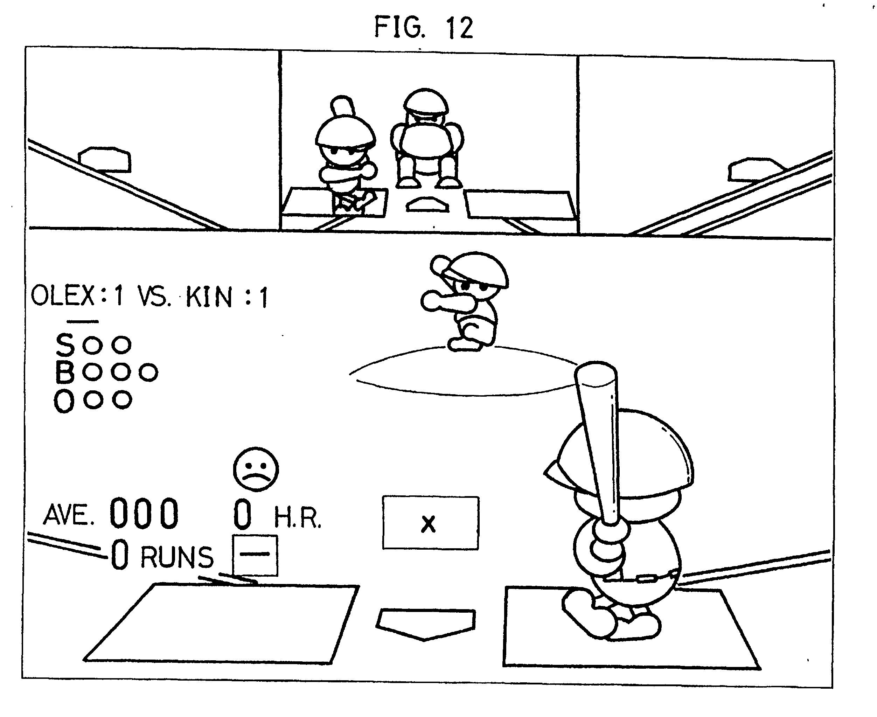

In FIG. 2, the ROM 41 in the game cartridge 4 has a memory map for storing various game programs, various patterns of speech and action of a play character (see sentences representing speech patterns in FIGS. 8 through 11), actions of the play character and related characters (see FIG. 12), basic screen image data, background image data, and other image data. The RAM 42 in the game cartridge 4 has a memory map for storing credits, a table of added and subtracted credits, ability settings, physical and mental conditions (physical shape, guts, etc.) as updated values.

The ROM 101, which is connected to the CPU 10, stores a program for decoding commands sent from the keys 21 ~ 24 of the controllers 2 and forming basic game image data to be sent to the display monitor 3. The process carried out by the program stored in the ROM 101 with respect to the controllers 2 and the display monitor 3 is of a basic nature which remains the same irrespective of whether one or different game cartridges 4 are used. The RAM 102, which is connected to the CPU 10, serves to temporarily store data which are being processed during the video game.

The display monitor 3 is connected to a display RAM 11 which is connected to the CPU 10. The display RAM 11 stores data of a single screen image at a time. Image data are alternately written into and read out of the display RAM 11 repeatedly at the period of 1/60 second to enable the display monitor 3 to display stable images based on the phenomenon of afterimage.

A game image forming means 12 determines a game image depending on commands from the controllers 2, a game program stored in the ROM 41, and data stored in the RAM 42, and delivers data of screen images (see FIGS. 3 through 18) to the display RAM 11. For starting a video game, an initial screen image shown in FIG. 3 is displayed on the display monitor 3, and the cross key 23 of one of the controllers 2 is operated by the video game player to move the cursor to "success" (indicated by the double lines), and the control key 24 is then pressed. Now, the "SUCCESS" game is started.

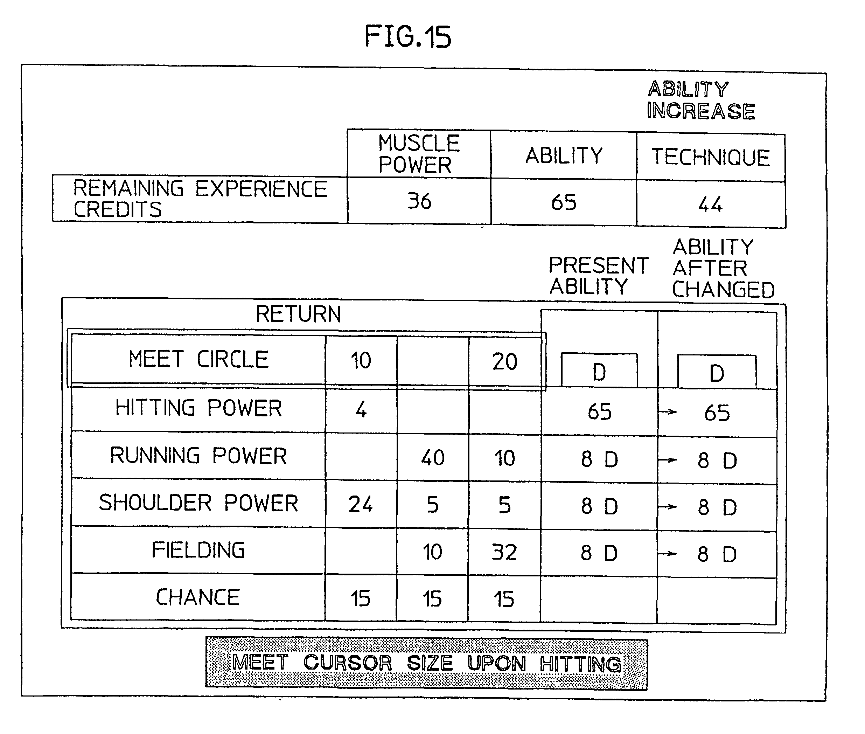

An incrementing/decrementing means 13 adds a predetermined value to "remaining experience credits" (see FIG. 15) when "camp" is selected and various practices are performed, or subtracts a predetermined value from "remaining experience credits" when a negative event occurs.

A probability changing means 14 serves to randomly determine a probability with which the incrementing/decrementing means 13 adds a predetermined value to or subtract a predetermined value from "remaining experience credits". Specifically, the probability changing means 14 determines a probability in view of changing factors including the types of various practices, the types of various events, the number of months and weeks that have passed, and a history of practices and events that have occurred so far. For example, if these changing factors are of a favorable nature, then they serve to increase the probability, and if they are not, then they serve to reduce the probability, provided a predetermined value is added to "remaining experience credits". Specifically, the probability may be increased or reduced by increasing or reducing the number of numerical values that agree with numerical values in a certain range.

A remaining experience credits distributing means 15 performs calculations to assign "remaining experience credits" to various "abilities". The "remaining experience credits" are available in three classes: "muscle power", "agility", and "technique". The number of the credits in these classes may be increased depending on the types of practices in "camp" and other factors.

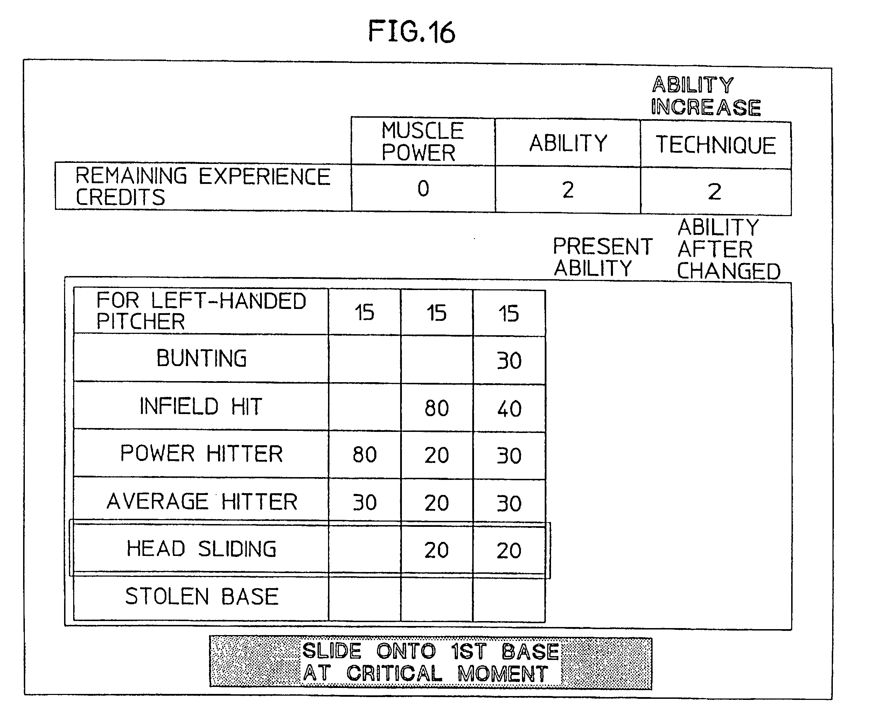

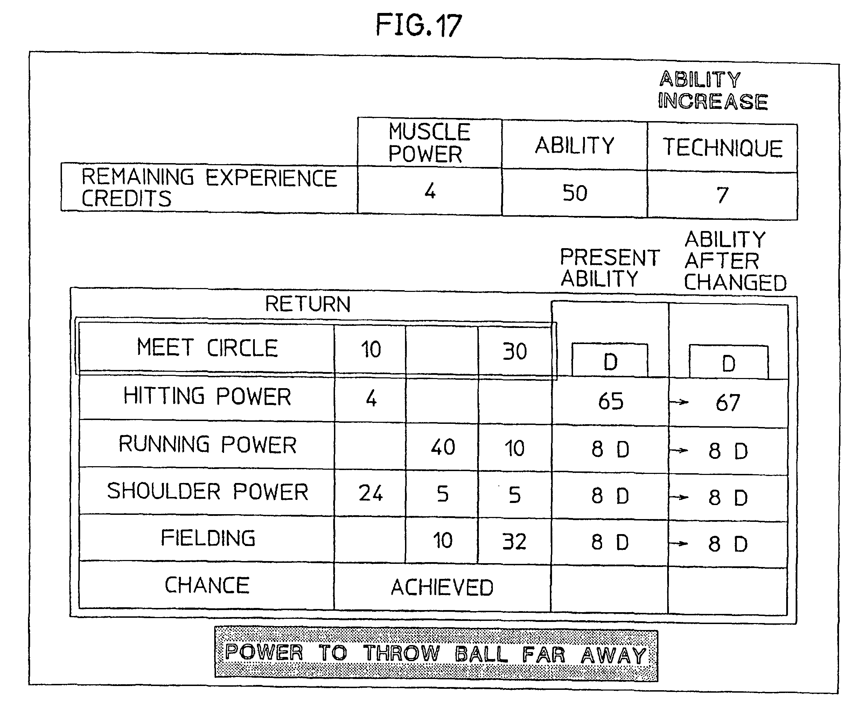

Assignment of the "remaining experience credits" to various "abilities" will be described below with reference to FIGS. 15 through 17. Tables shown in FIGS. 15 and 16 contain numerical values which represent the numbers of "remaining experience credits" which are required to increase various "abilities" by one point. Specifically, in FIG. 15, the "muscle power" has 36 "remaining experience credits", "batting power" has 65 points, and "shoulder power" has 8 points. If the "batting power" is increased up to 67 points by 2 points, and the "shoulder power" is increased up to 9 points by 1 point as shown in FIG. 17, then the number of "remaining experience credits" for "muscle power" is 4 (= 36 - 4 × 2 - 24). Similarly, the "technique" which has 44 "remaining experience credits" in FIG. 15 is reduced to 7 "remaining experience credits" (= 44 - 5 - 32) in FIG. 17 because each of the "shoulder power" and the "defense" is increased by 1 point. The "agility" which has 65 "remaining experience credits" in FIG. 15 is reduced to 50 "remaining experience credits" (=65-5-10) in FIG. 17 because each of the "shoulder power" and the "defense" is increased by 1 point.

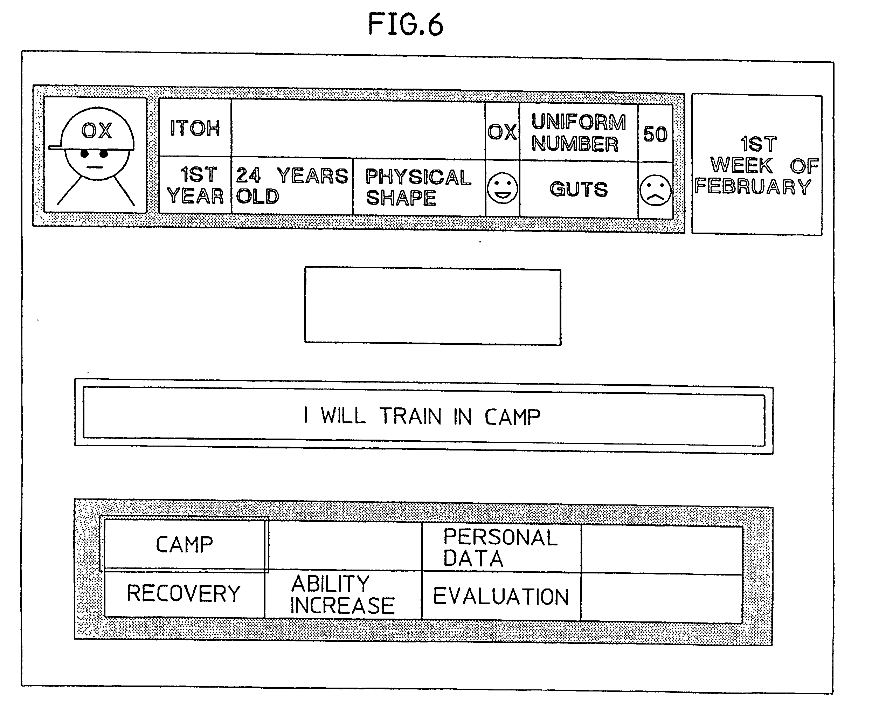

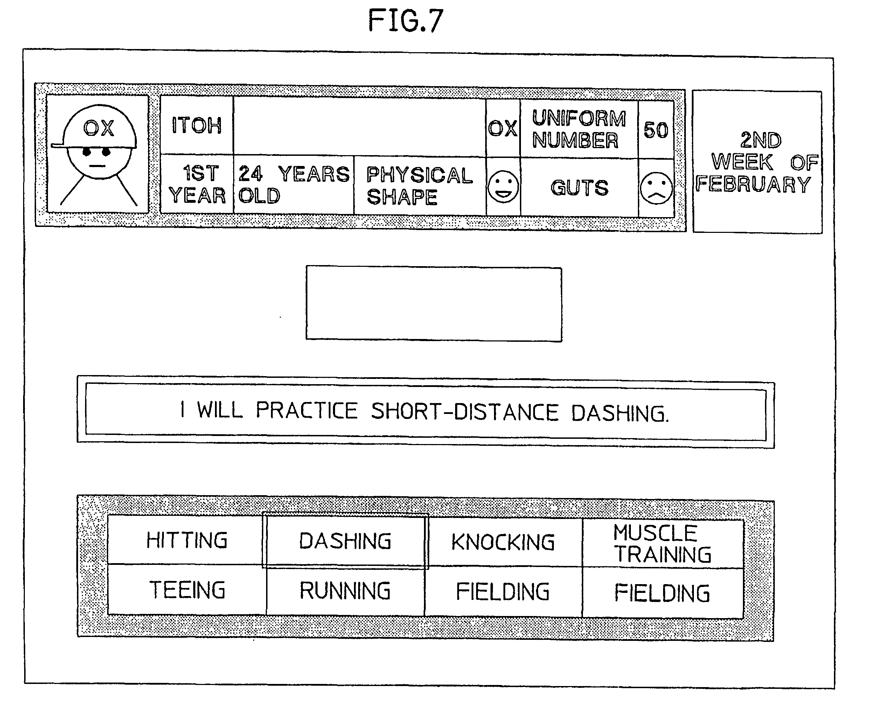

A month/week changing means 16 serves to spend time by one week each time the control key 24 is pressed once. For example, "February, 1st week" shown in FIG. 6 changes to "February, 2nd week" shown in FIG. 7 and then to "February, 3rd week" shown in FIG. 8, so that time is incremented by one week at a time. The number of years spent by the baseball player with a baseball team is also displayed in an upper area on the display screens shown in FIGS. 6 through 11.

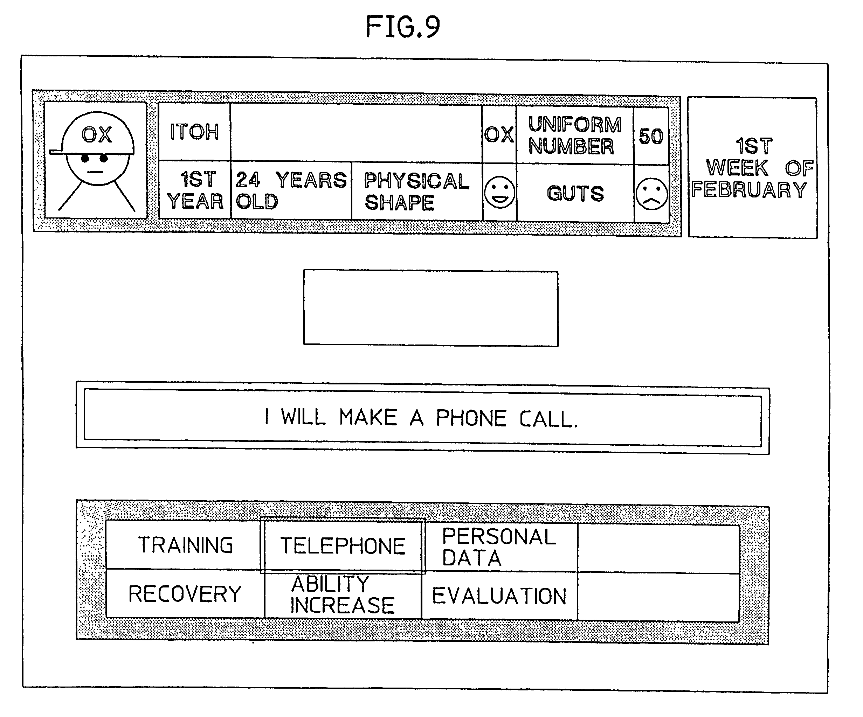

A physical/mental condition changing means 17 serves to represent "physical shape" and "guts" with respective face marks as shown in an upper right area in FIG. 6. The "physical shape" can be reduced when the baseball player practices too much in "camp" (see a lower left area in FIG. 6), and can be increased by "recovery" (see the lower left area in FIG. 6), hospitalization, or the like. The "guts" can be increased or reduced by "camp", an event, "recovery", or "telephone" (see FIG. 9).

A sound generating means 18 send signals to a loudspeaker 31 to generate speech sounds and effect sounds.

The above various means 12, 13, 14, 15, 16, 17, 18 are connected to the CPU 10.

The various displayed screen images shown in FIGS. 3 through 18 will briefly be described below.

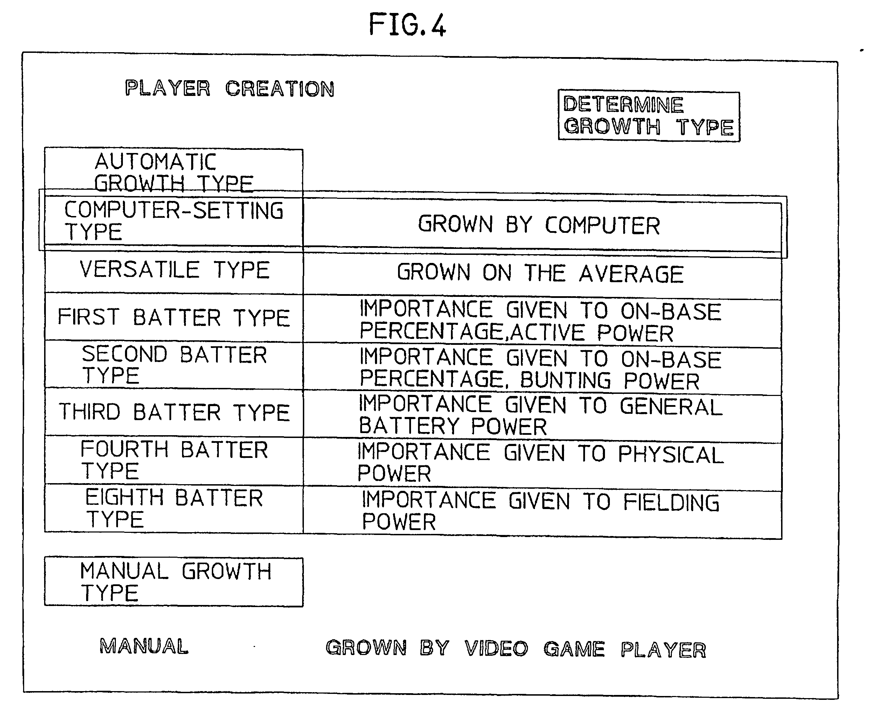

FIG. 3 shows an initial screen image in which various video games can be selected. If a "success" game is selected in the initial screen image by a cursor as shown in FIG. 3, then a screen image shown in FIG. 4 is displayed on the display monitor 3.

The screen image shown in FIG. 4 serves to register a rookie baseball player in two alternative modes, i.e., "automatic growth type" and "manual growth type". In the "automatic growth type", the growth of a registered rookie baseball player is controlled by the microcomputer. In the "manual growth type", the growth of a registered rookie baseball player is controlled manually by the video game player according to custom settings. When the "automatic growth type" is selected, there are available seven baseball player types, i.e., a "computer-setting type", a "versatile type", a "first batter type", a "second batter type", a "third batter type", a "fourth batter type", and an "eighth batter type" to choose from. In FIG. 4, the cursor is set to the "computer-setting type".

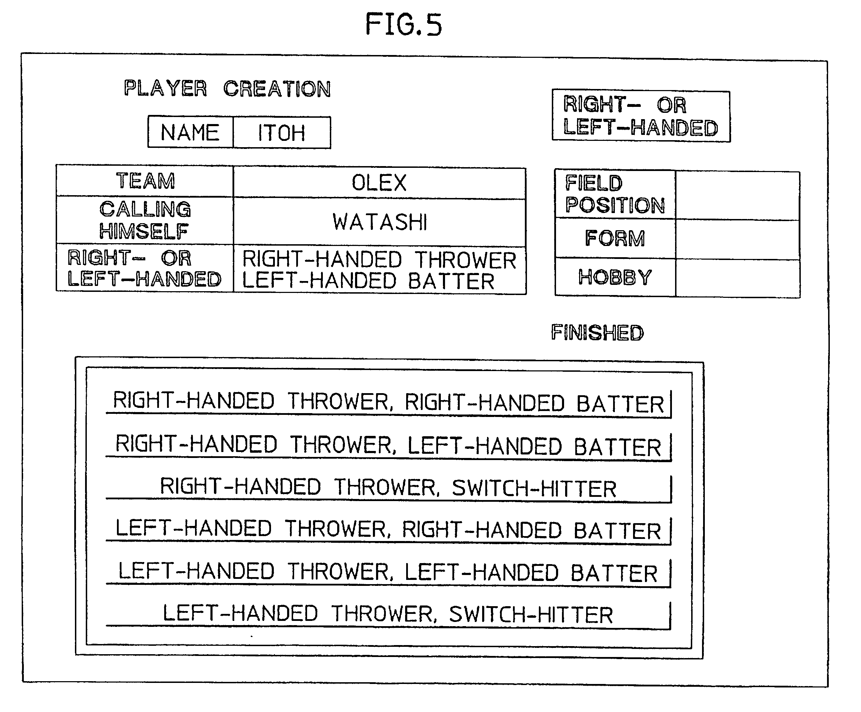

FIG. 5 shows a next screen image for entering personal data to identify a rookie baseball player. For example, the personal data include "name", "right- or left-handed", "field position", "form", etc. An item of data which is being established at present is displayed in an upper right area of the screen image. The screen image displays in its lower area data corresponding to data in a location where the cursor is positioned. The video game player can select desired data from the data displayed in the lower area of the screen image. In FIG. 5, the cursor is set to "right-handed thrower, left-handed batter".

FIG. 6 shows a next screen image for indicating speech and action. The screen image shown in FIG. 6 displays "camp", "recovery", "ability increase", "personal data", and "evaluation" which can be selected. In FIG. 6, the cursor is set to the "camp".

FIG. 7 shows a screen image displayed when the "camp" is selected. The screen image contains practices "batting", "teeing", "dashing" (to which the cursor is set), "running", "knocking", "fielding", "muscle training", and "return". In each of these practices, the numbers of "remaining experience credits" in the different classes are increased or decreased according to the probability determined by the probability changing means 14. For example, if the practice "muscle training" is selected, then the number of "remaining experience credits" for "muscle power" may increase, but the number of "remaining experience credits" for "technique" may decrease. When "return" is selected, the displayed image returned to the preceding screen image. Unlike the other practices, the practice "batting" depends on the ability of the video game player to increase or decrease the numbers of "remaining experience credits" according to the probability determined by the probability changing means 14. Basically, a screen image in which a ball is pitched by a batting pitcher, similar to a screen image shown in FIG. 12 (described later on), is displayed for the baseball player to practice batting a predetermined number of balls. Specifically, the video game player moves a meet cursor MC (FIG. 12), showing a region where the course of the ball meets the bat, vertically and horizontally with the cross key 23, and operates the control key 24 to hit the ball with the bat. If the video game player is successful in batting the ball, then the numbers of "remaining experience credits" are increased according to the probability determined by the probability changing means 14. Conversely, if the video game player fails to hit the ball, then the numbers of "remaining experience credits" are decreased according to the probability determined by the probability changing means 14.

FIG. 8 shows a screen image displayed when "recovery" shown in FIG. 6 is selected. The screen image shown in FIG. 8 contains "rest", "play", and "return".

FIG. 9 shows a screen image similar to the screen image shown in FIG. 6 except that "telephone" which is displayed under various conditions can be selected. If the baseball player is hospitalized due to an injury as a negative event, then "recovery" and "telephone" are displayed and "camp" is not displayed in the screen image shown in FIG. 9. Therefore, "camp" cannot be selected in the screen image shown in FIG. 9.

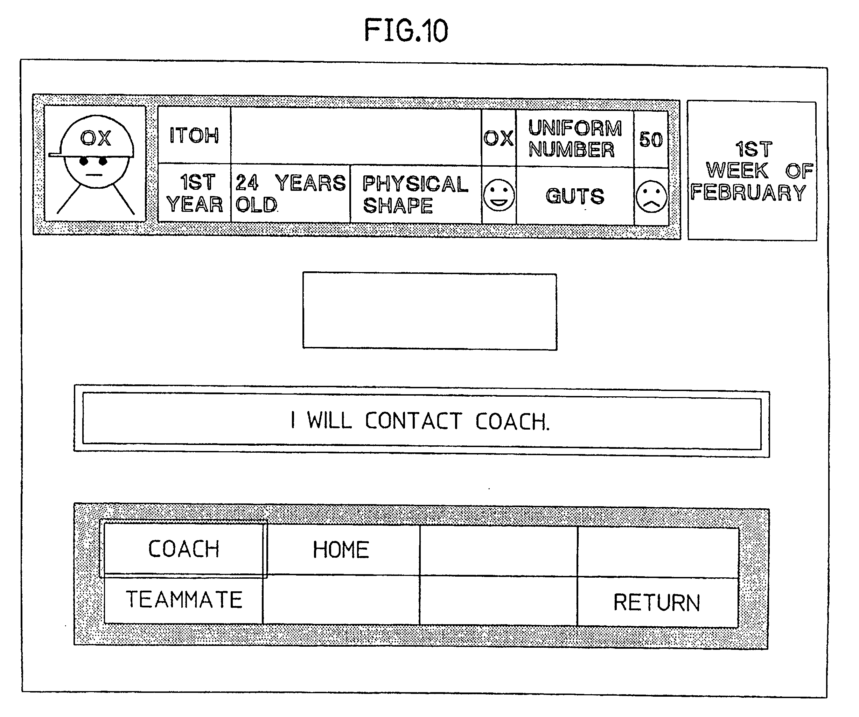

FIG. 10 shows a next screen image displayed when "telephone" is selected in the screen image shown in FIG. 9. When "telephone" is selected, the baseball player can call "coach", "teammate", or "home". If the baseball player calls the "coach", then various conversions are made, and basically the numbers of "remaining experience credits" are increased, but other points fall. If the baseball player calls the "teammate", then the evaluation by the manager increases. If the baseball player calls the "home", then the "guts" increases, but other points drop. The values of these various factors are controlled by the incrementing/decrementing means 13 according to a change in the probability determined by the probability changing means 14.

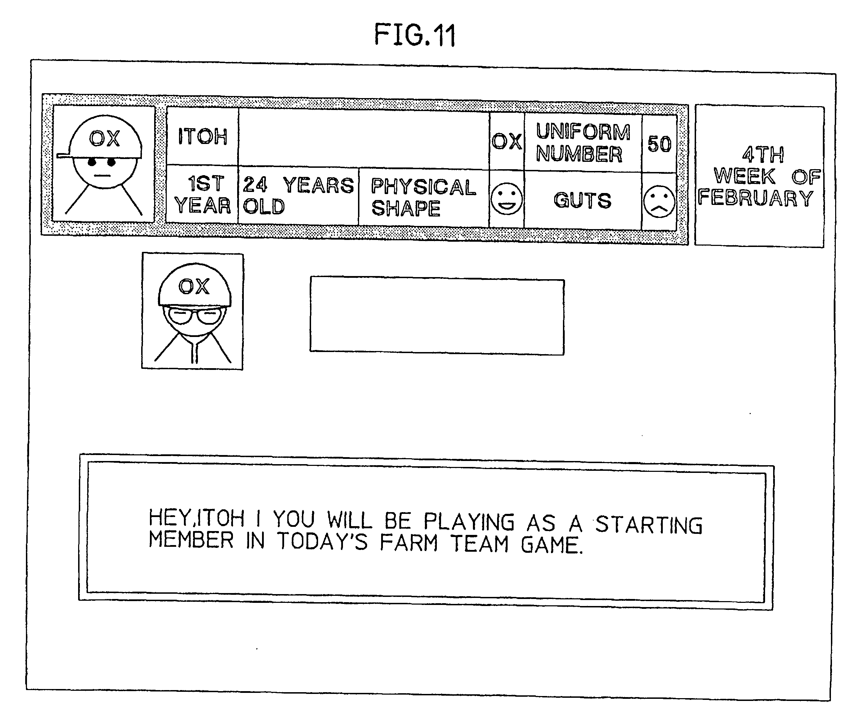

FIG. 11 shows a displayed screen image showing a conversation in which the baseball player is ordered to play as a starting member of the farm team by the manager based on a favorable evaluation which he has made.

FIG. 12 shows a screen image displayed next to the screen image shown in FIG. 11. The screen image shown in FIG. 12 displays the baseball player as he plays as a batter in a game of the farm team. The more hits the baseball player makes, the greater the evaluations made by the coach and the manager.

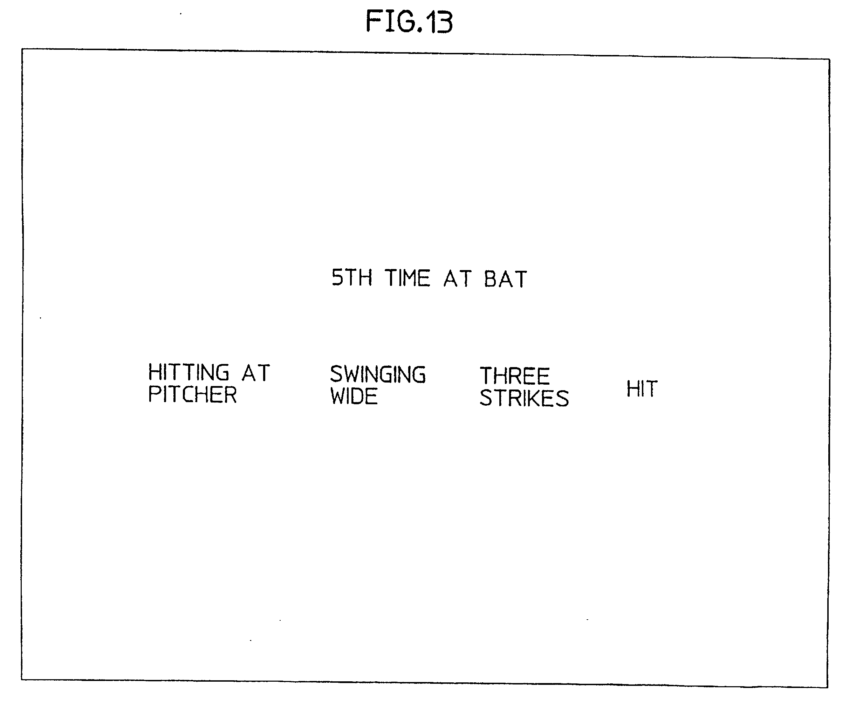

FIG. 13 shows a screen image displayed to show the results of the baseball player played as a starting member of the farm team. When the baseball player gets "three strikes", the evaluations made by the coach and the manager fall, so does the chance of the baseball player to play as a starting member of the farm team. These results are read as factors by the probability changing means 14 for affecting subsequent addition and subtraction of "remaining experience credits".

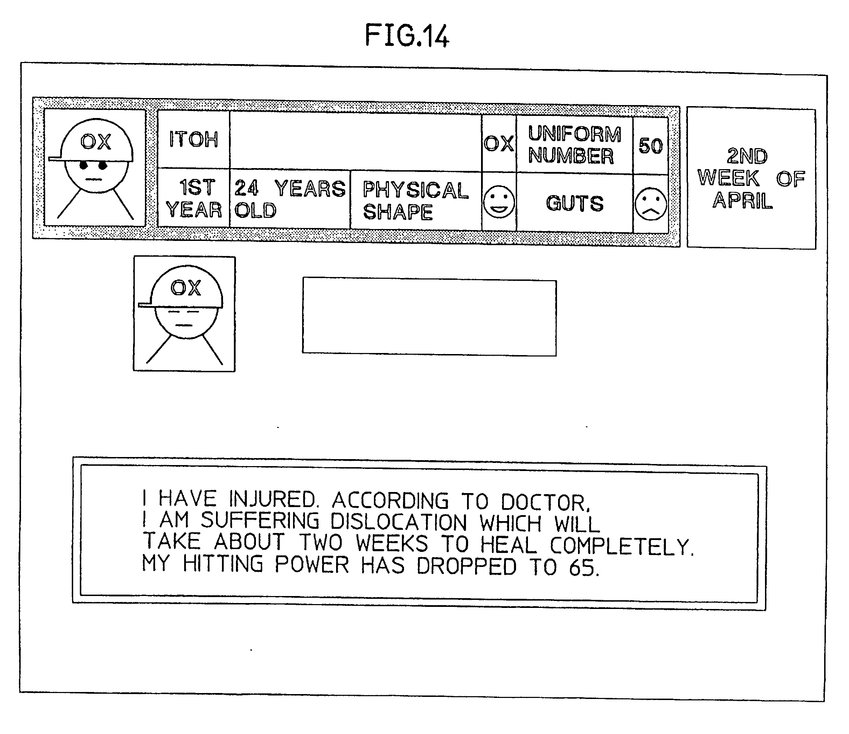

FIG. 14 shows a screen image displayed when the baseball player has suffered an injury as a negative event.

The details of the screen images shown in FIGS. 15 through 17 have been described above with respect to the assignment of the "remaining experience credits" to various "abilities". FIG. 16 shows a screen image which is displayed when the table shown in FIG. 15 is scrolled. The table displayed in FIG. 16 also contain numerical values which represent the numbers of "remaining experience credits" which are required to increase various "abilities" by one point. In FIG. 16, present and varied numerical values assigned to various "abilities" are omitted from illustration.

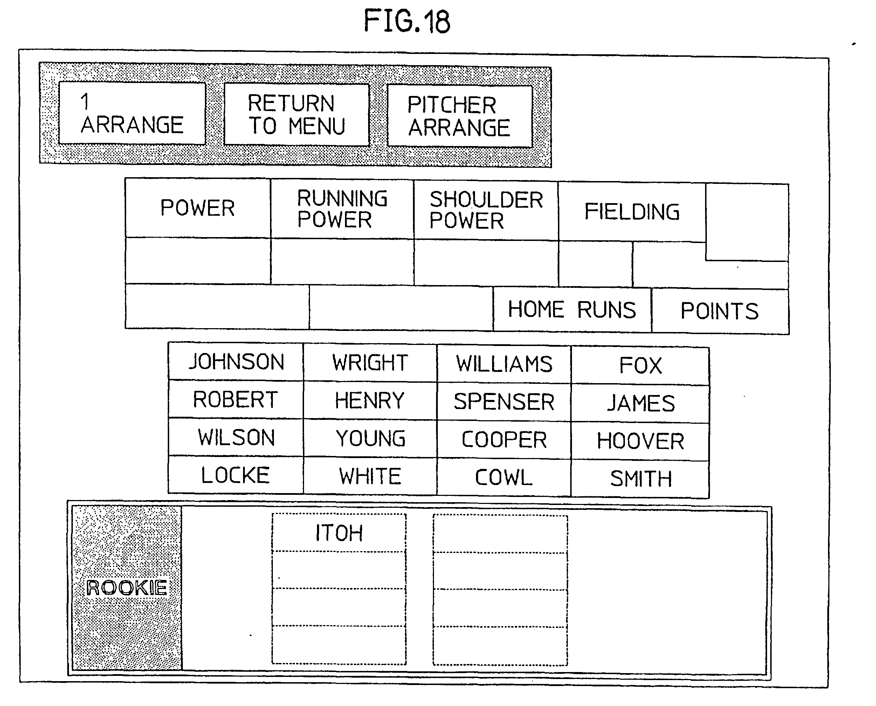

FIG. 18 shows a screen image displayed for registering a play character as a rookie baseball player. When a rookie baseball player is ordered to go to the major league team by the manager, his name is displayed in one of the boxes in the lower area of the screen image, and he can play in the major league team.

Although not shown, if a grown rookie baseball player goes to the major league team, then he is among the baseball players who can play in the major league team when a competing game is selected on the initial screen image shown in FIG. 3, and the rookie baseball player plays according to his abilities.

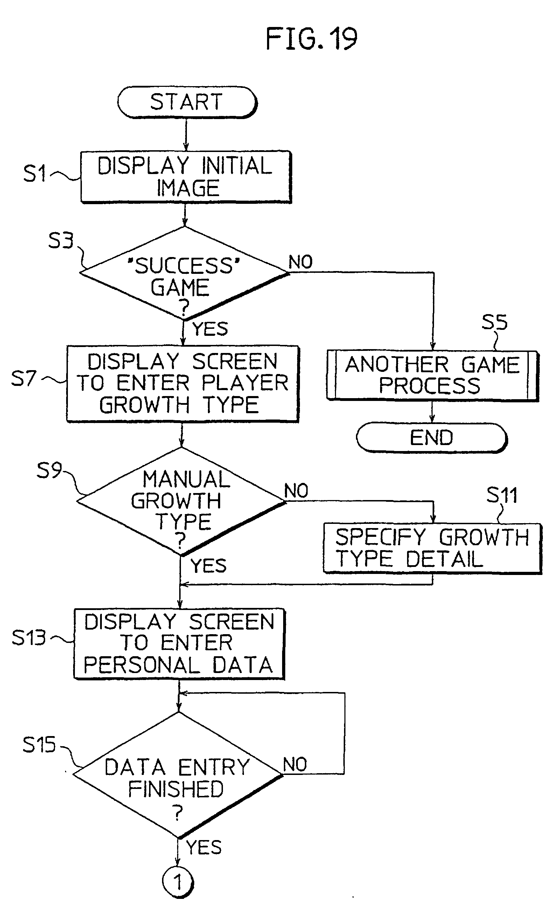

A main routine of the procedure of a "success" game will be described below with reference to FIG. 19.

In the "success" game, a rookie baseball player who has joined a baseball team repeats various practices and various events including a number of patterns of speech and action in a certain period of time, and grows into a player with unique abilities after being ordered to play as a starting member of the farm team until finally he is ordered to go to the major league team as instructed by the manager.

First, the initial screen image shown in FIG. 3 is displayed in a step S1. If the video game player moves the cursor to "success" on the initial screen image with the cross key 23 and then operates the control key 24 in a step S3, then a "success" game is initiated (YES in the step S3). Otherwise (NO in the step S3), another game is initiated.

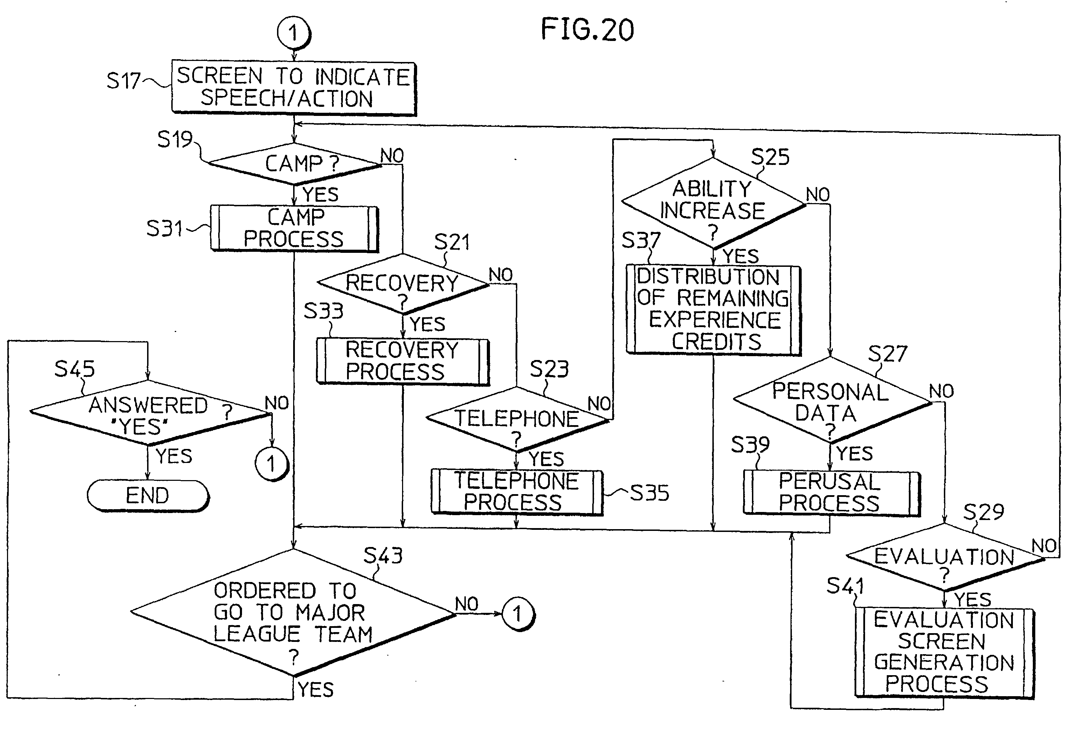

When the "success" game is started, a screen image displayed for registering a rookie baseball player as shown in FIG. 4 is displayed on the display monitor 3 in a step S7. Using the cross key 23 and the control key 24, the video game player selects the "manual growth type" or not in steps S9, S11. Then, a screen image for entering personal data to identify a rookie baseball player as shown in FIG. 5 is displayed on the display monitor 3 in a step S13. The video game player then registers desired data at respective items using the cross key 23 and the control key 24. When "finished" on the screen image is clicked after the registration of the data in a step S15, a screen image for indicating speech and action shown in FIG. 6 is displayed in a step S17 (see FIG. 20).

FIG. 20 shows a process for indicating speech and action. As shown in FIG. 20, steps S19, S21, S23, S25, S27, and S29 determine whether "camp", "recovery", "telephone", "ability increase", "personal data", and "evaluation", respectively, are selected or not. If they are selected, then corresponding processes are carried out in respective steps S31, S33, S35, S37, S39, and S41. These processes in the steps S31, S33, S35, S37, S39, and S41 will be described in detail below.

Thereafter, it is determined whether the baseball player has been instructed to go to the major league team by the manager or not in a step S43. At this time, "No" and "Yes" are displayed. If the video game player selects "Yes" with the cross key 23 and the control key 24, then the "success" game comes to an end, and the process shown in FIG. 20 is finished. Although not shown in FIG. 20, if the video game player wants to interrupt the "success" game, then the video game player resets the game in a given screen image, whereupon the data entered so far are stored and the process shown in FIG. 20 is finished. The process shown in FIG. 20 is also finished when a certain period of time, e.g., 3 years, in the "success" game has elapsed.

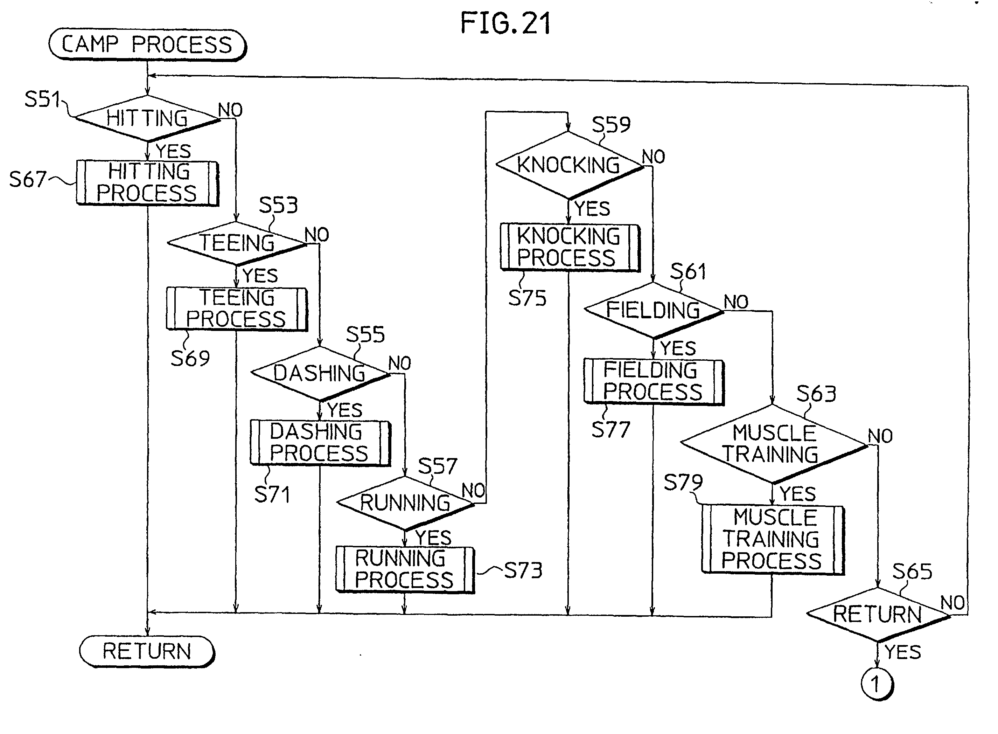

If "camp" is selected in the step S19 shown in FIG. 20, a screen image shown in FIG. 7 is displayed on the display monitor 3, and a process of "camp" shown in FIG. 21 is executed. In FIG. 21, it is determined whether either one of the practices "batting", "teeing", "dashing" (to which the cursor is set), "running", "knocking", "fielding", and "muscle training" is selected in steps S51, S53, S55, S57, S59, S61, and S63. If they are selected, then corresponding processes are carried out in respective steps S67, S69, S71, S73, S75, S77, and S79. If "return" is selected in a step S65, then control goes back to the step S17 (FIG. 20). Until any one of the practices is selected, control is looped, i.e., goes from the step S65 to the step S51. Basically, the probability changing means 14 is set to different probabilities with respect to the respective practices.

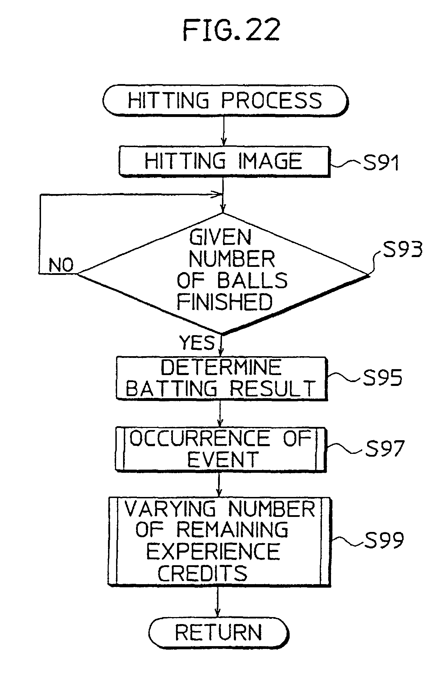

If "batting" is indicated in the screen image shown in FIG. 7, then a screen image similar to the screen image shown in FIG. 12 is displayed on the display monitor 3. The batting practice is carried out according to a process shown in FIG. 22. First, a batting practice image is displayed, and the batting pitcher throws a ball in the batting practice image in a step S91. The video game player moves the meet cursor MC on the batting practice image with the cross key 23, and instructs the displayed baseball player to swing the bat with the control key 24. The result of the batting practice is displayed in an image similar to the screen image shown in FIG. 13. If the batting practice with respect to a predetermined number of balls, i.e., 10 balls, is finished in a step S93, then the result of the batting practice is determined in a step S95. An event takes place and is displayed in a step S97, and a probability is established to vary the "remaining experience credits" in a step S99. Specifically, the probability to vary the "remaining experience credits" is changed by the probability changing means 14 based on the result of the batting practice. If the result of the batting practice is good, i.e., the baseball player has made many hits, then the probability for increasing the number of "remaining experience credits" is increased, i.e., the number of "remaining experience credits" for "technique" is increased by a large number of credits, and the "physical shape" of the baseball player is reduced. As a whole, therefore, the advantages and disadvantages of the baseball player are canceled out. If the result of the batting practice is poor, then the probability for reducing the number of "remaining experience credits" is increased, i.e., the number of "remaining experience credits" for "technique" is reduced. The probability for increasing or reducing the number of "remaining experience credits" is varied in small increments or decrements in view of various other factors including "physical shape", "guts", the number of months and weeks that have passed, and the practicing condition in previous "camp", etc.

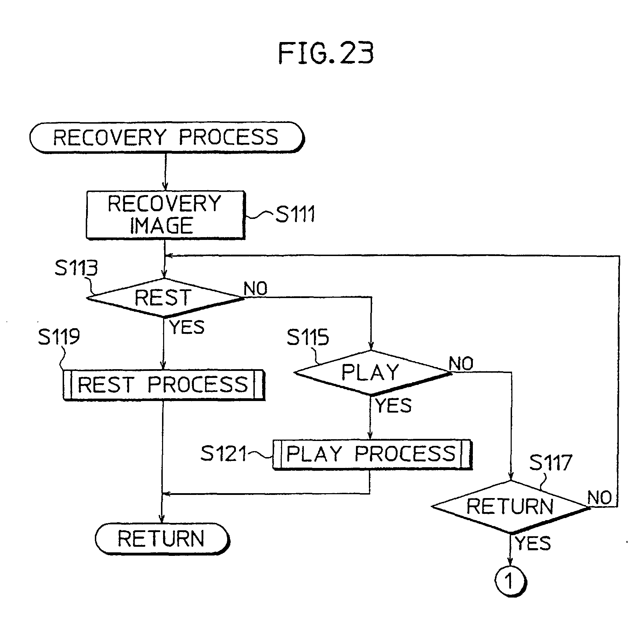

FIG. 23 shows a process that is carried out when "recovery" on the screen image shown in FIG. 6 is indicated. In this process, the screen image shown in FIG. 8 is displayed in a step S111. It is determined whether either one of "rest", "play", and "return" is selected in steps S113, S115, and S117. If "rest" and "play" are selected in the steps S113, S115, then corresponding processes are carried out in respective steps S119, S121. If "return" is selected in the step S117, then control goes back to the step S113. When "recovery" is indicated, the physical/mental conditions, i.e., "physical shape" and "guts", of the baseball player are increased (they may be increased by different degrees for "rest" and "play"), and the numbers of "remaining experience credits" for "muscle power" and "agility" are reduced based on probability. If "play" is selected, the degree by which the numbers of "remaining experience credits" for "muscle power" and "agility" are reduced may be reduced, or the numbers of "remaining experience credits" for "muscle power" and "agility" may be maintained provided a sport is registered for "hobby" in the personal data (see FIG. 5).

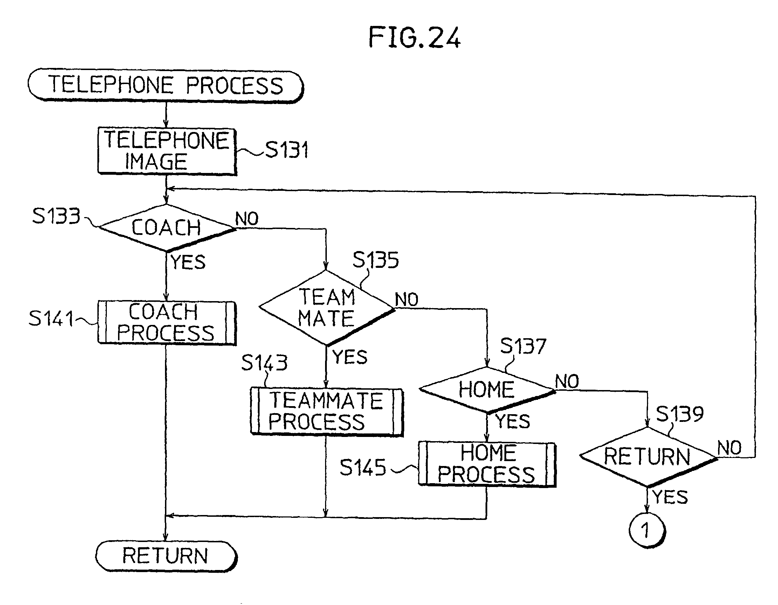

FIG. 24 shows a process that is carried out when "telephone" on the screen image shown in FIG. 9 is indicated. In this process, the screen image shown in FIG. 10 is displayed in a step S131. It is determined whether either one of "coach", "teammate", "home", and "return" is selected in steps S133, S135, S137, and S139. If "coach", "teammate", and "home" are selected in the steps S133, S135, S137, then corresponding processes are carried out in respective steps S141, S143, S145. If "return" is selected in the step S139, then control goes back to the step S133. If a telephone call is made to the "coach", then the confidence which the coach and the manager has in the baseball player is increased in view of the history of practices so far, resulting in an increase in the "guts" and the opportunity of playing as a starting member in a game of the farm team. However, the confidence which the teammates have in the baseball player is reduced, and the rate at which negative events occur is increased, tending to cause the number of ""remaining experience credits" to be reduced unexpectedly. If the baseball player calls "teammate", then the number of ""remaining experience credits" is not directly affected, but the rate at which positive events occur is increased, resulting in an increase in the probability that the number of ""remaining experience credits" will be increased. If the baseball player calls "home", then the "guts" is increased or reduced in view of the history of practices so far.

FIGS. 11 through 13 show successive screen images which are displayed when the baseball player is ordered to play as a starting member in a game of the farm team by the manager. FIG. 11 shows a screen image which contains an order from the manager to play as a starting member. FIG. 12 shows a screen image in which the baseball player is standing as a batter in a batter's box. In FIG. 12, the video game player moves the meet cursor MC horizontally and vertically with the cross key 23 and causes the batter to swing the bat with the control key 24, trying to hit the ball. FIG. 13 shows the batting results of the baseball player. The more the number of hits, the confidence which the coach and the manager has in the baseball player is increased. Otherwise, the confidence in the baseball player is reduced. The confidence thus determined is reflected in the "guts". Since the speech and action of the play character as the baseball player employ elements directly involving the abilities of the video game player, as described above, the video game develops many aspects as the play character grows, and makes itself interesting and gives the video game player a lot of fun.

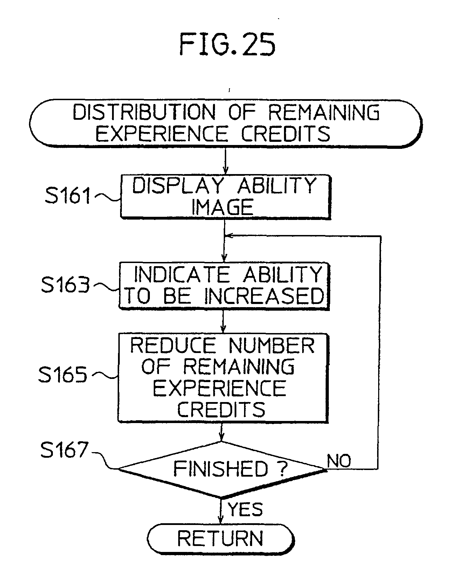

FIG. 25 shows a process for distributing "remaining experience credits". In this process, the screen images shown in FIGS. 15 through 17 are displayed in a step S161. When the video game player positions the cursor in an ability to be increased with the cross key 23 and then presses the control key 24 in a step S163, the present ability increases to the ability after it has changed, by a rank corresponding to the number of times that the control key 24 is pressed. When the ability is increased, the corresponding number of "remaining experience credits" which the baseball player has is reduced in a step S165. Any of the abilities can be increased until the corresponding "remaining experience credits" are eliminated. If the meet circle is increased from a present rank D to a rank C, for example, then a large number of unit credits is necessary to increase the abilities. In the example shown in FIG. 15, 4 credits are needed from the "remaining experience credits" for "muscle power" in order to increase the "batting power" by one rank. Since the abilities can be increased, when necessary, from the screen image shown in FIG. 6, the video game player can impart various abilities to the play character. However, "remaining experience credits" may not be obtained as desired.

In the above embodiment, the video game has been described as a game for growing a baseball player. However, the principles of the present invention are also applicable to various competing games in sports and other fields which require players to have individual abilities and unique characters.

The data of the play character according to the embodiment may be stored in the RAM of the game cartridge 4 (see FIG. 1), and may be sent, with a password, into a competing game which is played by the video game player and another video game player to enjoy the competing game with the play character and a play character which has been grown by the other video game player.

Although a certain preferred embodiment of the present invention has been shown and described in detail, it should be understood that various changes and modifications may be made therein without departing from the scope of the appended claims.

## Claims

1. A video game apparatus comprising:
a display unit (3) for displaying a play character and patterns of speech/action made by the play character, and menus corresponding to the patterns of speech and action;
a control unit (2) for selectively indicating the menus;
**characterized by** a
speech/action memory means (41) for storing a pattern of speech/action indicated by said control unit (2);
speech/action control means for reading the pattern of speech/action indicated by said control unit (2) from said speech/action memory means (41) and controlling the play character to perform the pattern of speech/action;
credit memory means (42) for storing at least one type of credits given to the play character;
credit varying means (13) for increasing or reducing the number of credits of said at least one type depending on the pattern of speech/action indicated by said control unit (2);
probability control means (14) for increasing or reducing the number of credits with a probability depending on the pattern of speech/action indicated by said control unit (2);
ability value memory means (42) for storing a plurality of ability values representing a plurality of abilities of the play character; and
ability value distributing means (15) for distributing the credits stored in said credit memory means (42) to said plurality of ability values with said control unit (2), and updating the ability values stored in said ability value memory means (42) according to the distributed credits.

2. A video game apparatus according to claim 1, wherein said control unit (2) has at least one type of speech/action governed by an ability of a video game player, said probability control means (14) comprising means for varying said probability based on said type of speech/action.

3. A video game apparatus according to claim 1, wherein said probability control means (14) comprises means for varying said probability depending on a plurality of patterns of speech/action indicated by said control unit (2).

4. A video game apparatus according to claim 1, further comprising timer means (16) for allowing a predetermined period of time to elapse each time said control unit (2) selects one of said menus, said speech/action control means comprising means for randomly varying the pattern of speech/action depending on the passage of said predetermined period of time when said control unit (2) selects one of said menus, said probability control means (14) comprising means for varying said probability depending on the pattern of speech/action randomly varied by said speech/action control means.

5. A video game apparatus according to claim 1, further comprising physical/mental condition memory means (42) for storing a physical/mental condition of said play character, and physical/mental condition changing means (17) for changing the physical/mental condition of said play character depending on the pattern of speech/action indicated by said control unit (2), said probability control means (14) comprising means for varying said probability depending on the physical/mental condition of said play character.

6. A video game apparatus according to claim 1, further comprising competing game control means (2) for carrying out a competing game with said display unit (3), said control unit (2) having means for selecting either one of a mode for growing the play character and a mode for performing said competing game, said competing game control means (2) comprising means responsive to a selection by said control unit of said mode for performing said competing game, for introducing the play character having said ability values into said competing game and controlling the play character to act according to said ability values in said competing game.

7. A method of controlling the growth of a play character in a video game performed by a video game apparatus having a display unit for displaying a play character and patterns of speech/action made by the play character, and menus corresponding to the patterns of speech and action, a control unit for selectively indicating the menus, speech/action memory means for storing a pattern of speech/action indicated by said control unit, and speech/action control means for reading the pattern of speech/action indicated by said control unit from said speech/action memory means and controlling the play character to perform the pattern of speech/action, said method comprising the steps of:
imparting at least one type of credits to the play character;
increasing or reducing the number of credits of said at least one type with a probability depending on the pattern of speech/action indicated by said control unit;
storing the increased or reduced number of credits of said at least one type;
operating said control unit to distribute the stored number of credits of said at least one type to a plurality of ability values representing a plurality of abilities of the play character; and
storing the ability values with the distributed number of credits of said at least one type.

8. A video game medium for use in a video game for displaying patterns of speech/action made by a play character, selectively indicating menus corresponding to the patterns of speech and action with a control units (2), and controlling the play character to perform a pattern of speech/action indicated by said control unity (2), said video game medium (4) comprising:
means for imparting at least one type of credits to the play character;
means for increasing or reducing the number of credits of said at least one type with a probability depending on the pattern of speech/action indicated by said control unit (2);
means for storing the increased or reduced number of credits of said at least one type;
means for operating said control unit (2) to distribute the stored number of credits of said at least one type to a plurality of ability values representing a plurality of abilities of the play character; and
means for storing the ability values with the distributed number of credits of said at least one type.

## Patentansprüche

1. Videospielvorrichtung, umfassend:
eine Anzeigeeinheit (3) zum Anzeigen einer Spielfigur und von Sprachmustern/Aktions- bzw. Tätigkeitsmustern, die durch die Spielfigur getätigt werden, und Menüs entsprechend den Mustern von Sprache und Aktion bzw. Tätigkeit;
eine Steuer- bzw. Regeleinheit (2) zum selektiven Anzeigen der Menüs;
**gekennzeichnet durch**
Sprach/Tätigkeitsspeichermittel (41) zum Speichern eines Sprach/Tätigkeitsmusters, das **durch** die Steuer- bzw. Regeleinheit (2) angezeigt ist;
Sprach/Tätigkeits-Steuer- bzw. -Regelmittel zum Lesen des Sprach/Tätigkeitsmusters, das **durch** die Steuer- bzw. Regeleinheit (2) angezeigt ist, aus den Sprach/Tätigkeitsspeichermitteln (41) und zum Steuern bzw. Regeln der Spielfigur, um das Sprach/Tätigkeitsmuster durchzuführen;
Kredit- bzw. Guthabenspeichermittel (42) zum Speichern von wenigstens einer Art von der Spielfigur verliehenen Guthaben bzw. Kredite;
Guthabenvariierungsmittel (13) zum Erhöhen oder Reduzieren der Anzahl von Guthaben der wenigstens einen Art in Abhängigkeit von dem Sprach/Tätigkeitsmuster, das **durch** die Steuer- bzw. Regeleinheit (2) angezeigt ist;
Wahrscheinlichkeits- bzw. Möglichkeitssteuer- bzw. -regelmittel (14) zum Erhöhen oder Reduzieren der Anzahl von Guthaben mit einer Wahrscheinlichkeit in Abhängigkeit von dem Sprach/Tätigkeitsmuster, das **durch** die Steuer- bzw. Regeleinheit angezeigt ist;
Fähigkeitswertspeichermittel (42) zum Speichern einer Mehrzahl von Fähigkeitswerten, die eine Mehrzahl von Fähigkeiten der Spielfigur anzeigen; und
Fähigkeitswertverteilungsmittel (15) zum Verteilen der in den Guthabenspeichermitteln (42) gespeicherten Guthaben an die Mehrzahl von Fähigkeitswerten mit der Steuer- bzw. Regeleinheit (2) und zum Aktualisieren der Fähigkeitswerte, die in den Fähigkeitswert-Speichermitteln (42) gespeichert sind, entsprechend den verteilten Guthaben.

2. Videospielvorrichtung nach Anspruch 1, worin die Steuer- bzw. Regeleinheit (2) wenigstens eine Art von Sprache/Tätigkeit aufweist, die durch eine Fähigkeit eines Videospielspielers verwaltet bzw. beherrscht ist, wobei die Wahrscheinlichkeitssteuermittel (14) Mittel zum Variieren der Wahrscheinlichkeit basierend auf der Sprach/Tätigkeitsart umfassen.

3. Videospielvorrichtung nach Anspruch 1, worin die Wahrscheinlichkeitssteuermittel (14) Mittel zum Variieren der Wahrscheinlichkeit in Abhängigkeit von einer Mehrzahl von Sprach/Tätigkeitsmustern umfassen, die durch die Steuer- bzw. Regeleinheit (2) angezeigt sind.

4. Videospielvorrichtung nach Anspruch 1, weiters umfassend Zeitgebermittel (16) zum Erlauben, daß ein vorbestimmter Zeitraum jedesmal verstreicht, wenn die Steuer- bzw. Regeleinheit (2) eines der Menüs auswählt, wobei die Sprach/ Tätigkeitssteuermittel Mittel zum statistischen bzw. zufälligen Variieren des Sprach/Tätigkeitsmusters in Abhängigkeit von dem Verstreichen bzw. Ablaufen des vorbestimmten Zeitraumes umfassen, wenn die Steuer- bzw. Regeleinheit (2) eines der Menüs auswählt, wobei die Wahrscheinlichkeitssteuermittel (14) Mittel zum Variieren der Wahrscheinlichkeit in Abhängigkeit von dem Sprach/Tätigkeitsmuster umfassen, das statistisch bzw. zufällig durch die Sprach/Tätigkeitssteuermittel variiert wird.

5. Videospielvorrichtung nach Anspruch 1, weiters umfassend physikalische/mentale Zustandsspeichermittel (42) zum Speichern eines physikalischen/mentalen Zustands der Spielfigur und physikalische/mentale Zustandsänderungsmittel (17) zum Ändern des physikalischen/mentalen Zustands der Spielfigur in Abhängigkeit von dem Sprach/Tätigkeitsmuster, das durch die Steuer- bzw. Regeleinheit (2) angezeigt bzw. angedeutet ist, wobei die Wahrscheinlichkeitssteuermittel (14) Mittel zum Variieren der Wahrscheinlichkeit in Abhängigkeit von dem physikalischen/mentalen Zustand der Spielfigur umfassen.

6. Videospielvorrichtung nach Anspruch 1, weiters umfassend Wettbewerbsspiel-Steuer- bzw. -Regelmittel (2) zum Durchführen eines konkurrierenden Spiels bzw. Wettbewerbsspiels mit der Anzeigeeinheit (3), wobei die Steuer- bzw. Regeleinheit (2) Mittel zum Auswählen von irgendeinem eines Modus zum Vergrößern bzw. Wachsen der Spielfigur und eines Modus zum Durchführen des Wettbewerbsspiels aufweist, wobei die Wettbewerbsspiel-Steuer- bzw. -Regelmittel (2) Mittel umfassen, die auf eine Auswahl durch die Steuer- bzw. Regeleinheit des Modus zum Durchführen des Wettbewerbsspiels ansprechen, um die Spielfigur, die diese Fähigkeitswerte aufweist, in das Wettbewerbsspiel einzuführen und die Spielfigur zu steuern bzw. regeln, um in Übereinstimmung mit den Fähigkeitswerten in dem Wettbewerbsspiel zu wirken.

7. Verfahren zum Steuern bzw. Regeln des Wachstums bzw. Anwachsens einer Spielfigur in einem Videospiel, das durch eine Videospielvorrichtung durchgeführt wird, welche eine Anzeigeeinheit für ein Anzeigen einer Spielfigur und von Sprach- bzw. Tätigkeitsmustern, die durch die Spielfigur getätigt werden, und Menüs entsprechend den Sprach- bzw. Tätigkeitsmustern, eine Steuer- bzw. Regeleinheit für ein selektives Anzeigen der Menüs, Sprach/Tätigkeitsspeichermittel zum Speichern eines Sprach/Tätigkeitsmusters aufweist, das durch die Steuer- bzw. Regeleinheit angezeigt wird, und Sprach/Tätigkeits-Steuer- bzw. -Regelmittel zum Lesen des Sprach/Tätigkeitsmusters, das durch die Steuer- bzw. Regeleinheit angezeigt wird, aus den Sprach/Tätigkeitsspeichermitteln und zum Steuern bzw. Regeln der Spielfigur, um das Sprach/Tätigkeitsmuster durchzuführen, welches Verfahren die Schritte umfaßt:
Verleihen von wenigstens einer Art von Krediten bzw. Guthaben an die Spielfigur;
Erhöhen oder Reduzieren der Anzahl von Guthaben der wenigstens einen Art mit einer Wahrscheinlichkeit in Abhängigkeit von dem Sprach/Tätigkeitsmuster, das durch die Steuer- bzw. Regeleinheit angezeigt ist;
Speichern der erhöhten oder reduzierten Anzahl von Guthaben der wenigstens einen Art;
Betätigen bzw. Betreiben der Steuer- bzw. Regeleinheit, um die gespeicherte Anzahl von Guthaben der wenigstens einen Art an eine Mehrzahl von Fähigkeitswerten, die eine Mehrzahl von Fähigkeiten der Spielfigur repräsentieren, zu verteilen; und
Speichern der Fähigkeitswerte mit der verteilten Anzahl von Guthaben der wenigstens einen Art.

8. Videospielmedium zur Verwendung in einem Videospiel für ein Darstellen von Sprach/Tätigkeitsmustern, die durch eine Spielfigur getätigt sind, selektives Anzeigen von Menüs entsprechend den Sprach- und Tätigkeitsmustern mit einer Steuer- bzw. Regeleinheit (2) und Steuern bzw. Regeln der Spielfigur, um ein Sprach/Tätigkeitsmuster durchzuführen, das durch die Steuer- bzw. Regeleinheit (2) angezeigt ist, wobei das Videospielmedium (4) umfaßt:
Mittel zum Verleihen wenigstens einer Art von Krediten bzw. Guthaben an die Spielfigur;
Mittel zum Erhöhen oder Reduzieren der Anzahl von Guthaben der wenigstens einen Art mit einer Wahrscheinlichkeit in Abhängigkeit von dem Sprach/Tätigkeitsmuster, das durch die Steuer- bzw. Regeleinheit (2) angezeigt ist;
Mittel zum Speichern der erhöhten oder reduzierten Anzahl von Guthaben der wenigstens einen Art;
Mittel für ein Betätigen der Steuer- bzw. Regeleinheit (2), um die gespeicherte Anzahl von Guthaben der wenigstens einen Art an eine Mehrzahl von Fähigkeitswerten, die eine Mehrzahl von Fähigkeiten der Spielfigur repräsentieren, zu verteilen; und
Mittel zum Speichern der Fähigkeitswerte mit der verteilten Anzahl von Guthaben der wenigstens einen Art.

## Revendications

1. Un appareil de jeu vidéo comprenant:
une unité d'affichage (3) pour afficher un personnage de jeu et des champs ou modèles de dialogue / d'action générés par le personnage de jeu et des menus correspondant aux champs de dialogue et d'action;
une unité de contrôle (2) pour indiquer les menus de manière sélective;
**caractérisé par**:
des moyens de mémorisation de dialogue / d'action (41) destinés à mémoriser un champs ou modèle de dialogue / d'action indiqué par ladite unité de contrôle (2);
des moyens de contrôle de dialogue / d'action destinés à lire le champ de dialogue / d'action indiqué par ladite unité de contrôle (2) à partir desdits moyens de mémorisation de dialogue /action (41) et destinés à contrôler le personnage de jeu afin de réaliser les champs de dialogue / d'action;
des moyens de mémorisation de crédit (42) destinés à stocker ou mémoriser au moins un type de crédit attribué au personnage de jeu;
des moyens de modification de crédit destinés à augmenter ou réduire le nombre de crédits d'au moins un type cité selon les champs de dialogue / d'action indiqués par ladite unité de contrôle (2);
des moyens de contrôle de la probabilité (14) destinés à augmenter ou de réduire le nombre de crédits avec une probabilité dépendant des champs de dialogue / d'action indiqués par ladite unité de contrôle (2);
des moyens de mémorisation (42) destiné à mémoriser la valeur de capacité destinés à stocker une pluralité de valeurs de capacité représentant une pluralité de capacités du personnage de jeu; et
des moyens de distribution (15) de la valeur de capacité destinés à distribuer les crédits stockés dans lesdits moyens de mémorisation de crédit (42) vers ladite pluralité de valeurs de capacité grâce à ladite unité de contrôle et destinés à mettre à jour les valeurs de capacité stockées dans lesdits moyens de mémorisation (42) de la valeur de capacité selon les crédits distribués.

2. Un appareil de jeu vidéo selon la revendication 1, dans lequel ladite unité de contrôle (2) a au moins un type de dialogue / action maîtrisé grâce à la capacité d'un joueur de jeu vidéo, lesdits moyens de contrôle de la probabilité (14) comprenant des moyens pour modifier ladite probabilité basée sur ledit type de dialogue / d'action.

3. Un appareil de jeu vidéo selon la revendication 1, dans lequel lesdits moyens de contrôle de la probabilité (14) comprennent des moyens pour modifier ladite probabilité en fonction d'une pluralité de champs ou modèles de dialogue / d'action indiqué grâce à ladite unité de contrôle (2).

4. Un appareil de jeu vidéo selon la revendication 1, comprenant en outre des moyens de temporisation (16) pour permettre qu'un intervalle de temps prédéterminée s'écoule chaque fois que ladite unité de contrôle (2) choisit un desdits menus, lesdits moyens de contrôle de dialogue /action comprenant des moyens pour modifier de façon hasardeuse ou aléatoire les champs en fonction du passage dudit intervalle de temps prédéterminé quand ladite unité de contrôle (2) choisi un desdits menus, lesdits moyens de contrôle de la probabilité (14) comprenant des moyens pour modifier ladite probabilité en fonction des champs de dialogue / d'action modifié de façon hasardeuse ou aléatoire grâce au moyens de contrôle de dialogue / d'action.

5. Un appareil de jeu vidéo selon la revendication 1, comprenant en outre des moyens de mémorisation de condition physique / mentale destinés à stocker une condition physique / mentale dudit personnage de jeu et des moyens de changements de condition physique / mental (17) destinés à modifier la condition physique / mentale dudit personnage de jeu en fonction des champs indiqués grâce à ladite unité de contrôle (2), lesdits moyens de contrôle de la probabilité (14) comprenant des moyens pour modifier ladite probabilité en fonction de ladite condition physique / mentale dudit personnage de jeu.

6. Un appareil de jeu vidéo selon la revendication 1, comprenant en outre des moyens de contrôle de jeu de compétition (2) destinés à exécuter un jeu de compétition avec ladite unité d'affichage (3), ladite unité de contrôle (2) ayant des moyens pour sélectionner soit un mode pour faire grandir le personnage de jeu soit un mode pour effectuer ledit jeu de compétition, lesdits moyens de contrôle du jeu de compétition comprenant des moyens répondant à une sélection par ladite unité de contrôle dudit mode pour effectuer ledit jeu de compétition, pour introduire ledit personnage de jeu ayant ladite valeur de capacité dans ledit jeu de compétition et pour commander le personnage de jeu afin qu'il agisse selon lesdites valeurs de capacité dans ledit jeu de compétition.

7. Un procédé pour contrôler l'agrandissement d'un personnage de jeu dans un jeu vidéo réalisé au moyen d'un appareil de jeu vidéo comprenant une unité d'affichage pour afficher un personnage de jeu et des champs ou modèles de dialogue / action effectués par ledit personnage de jeu et comprenant des menus correspondant aux champs ou modèles de dialogue / d'action, une unité de contrôle pour indiquer de façon sélective les menus, des moyens de mémorisation de dialogue / d'action pour stocker des champs de dialogue / d'action indiqués par ladite unité de contrôle, et des moyens de contrôle de dialogue / d'action pour lire les champs de dialogue / d'action indiqués par ladite unité de contrôle à partir desdits moyens de mémorisation de dialogue / d'action et pour commander le personnage de jeu afin qu'il effectue les champs de dialogue / d'action, ledit procédé comprenant les étapes suivantes:
- association d'au moins d'un type de crédit au personnage de jeu;
- augmentation, ou réduction du nombre de crédits d'au moins un type avec une probabilité dépendant des champs de dialogue / d'action indiqués par ladite unité de contrôle;
- stockage du nombre augmenté ou réduit de crédits dudit au moins un type;
- faire fonctionner ladite unité de contrôle afin qu'elle distribue le nombre de crédits stocké dudit au moins un type vers une pluralité de valeurs de capacité représentant une pluralité de capacités du personnage de jeu; et
- stockage des valeurs de capacité avec le nombre de crédits distribué dudit au moins un type.

8. Un support de jeu vidéo destiné à être utilisé dans un jeu vidéo pour afficher des champs de dialogue / d'action fait par un personnage de jeu, pour indiquer sélectivement des menus correspondant aux champs ou modèles de dialogue et d'action grâce à une unité de contrôle (2),et contrôler le personnage de jeu afin qu'il génère des champs de dialogue / d'action indiqués par ladite unité de contrôle (2), ledit support de jeu vidéo comprenant:
- des moyens pour associer au moins d'un type de crédit au personnage de jeu;
- des moyens pour augmenter ou réduire le nombre de crédits d'au moins un type avec une probabilité dépendant des champs de dialogue / d'action indiqué par ladite unité de contrôle (2);
- des moyens pour stocker le nombre augmenté ou réduit de crédits dudit au moins un type;
- des moyens pour faire fonctionner ladite unité de contrôle (2) afin qu'elle distribue le nombre de crédits stocké dudit au moins un type vers une pluralité de valeurs de capacité représentant une pluralité de capacités du personnage de jeu; et
- des moyens pour stocker ou mémoriser des valeurs de capacité avec le nombre de crédits distribué dudit au moins un type .
